# EUROPEAN PATENT APPLICATION

(11) **EP 2 757 138 A1**
(43) Date of publication of application: **23.07.2014**
(21) Application number: 13151411.9
(22) Date of filing: 16.01.2013
(51) Int. Cl.: C09K 8/68, C09K 8/64

(54) **Hydraulic fracturing composition**

(71) Applicant: ExxonMobil Chemical Patents Inc., Baytown, TX 77520-2101 (US)
(72) Inventor: The designation of the inventor has not yet been filed
(74) Representative: Plasman, Valérie M.L.

(57) **Abstract**

The invention relates to subterranean treatment fluids, and more particularly for hydraulic fracturing formulations, comprising a low viscosity hydrocarbon fluid having low pour point and low or no BTEX content combined with suitable additives.

## Description

### FIELD OF THE INVENTION

The invention relates to a composition comprising a low viscosity hydrocarbon fluid having low or no benzene, toluene, ethylbenzene, or xylene (BTEX) compounds for use in subterranean treatment fluids, especially for use in hydraulic fracturing formulations.

### BACKGROUND OF THE INVENTION

In the recovery of petroleum and natural gas from subterranean reservoirs several different liquids are generally used having different functional designations. Examples of such designations are: drilling fluid (drilling mud), cement slurry, completion fluid, packer fluid, perforation fluid, gravel packing fluid, acidizing fluid and fracturing fluid.

Hydraulic fracturing is an example of technologies that contribute to improvements in oil and gas production. Hydraulic fracturing is used to create additional passageways in the oil, gas, and/or coalbed reservoir that can, by way of example, facilitate the flow of oil and/or gas to a producing well. Unconventional reservoirs such as shale gas reservoirs, coalbed methane reservoirs, and "tight gas" reservoirs, such as those whose gas-containing matrix have restricted porosity and permeability that impede the flow of oil or gas through the reservoir, are commonly fractured by injecting a fluid containing sand or other "proppant" and other ingredients under sufficient pressure to create fractures in the rock through which the desired product can more easily flow.

Diesel is an example of an ingredient that has been used in hydraulic fracturing formulations and/or in additives that are used in hydraulic fracturing formulations. Diesel contains constituents regulated under the Safe Drinking Water Act (SDWA) because of their potential toxicity, including benzene, toluene, ethylbenzene, and xylenes (BTEX chemicals).

Various alternative fluids have been proposed to address these concerns and numerous compositions proposed for hydraulic fracturing. Representative examples include GB 2.084.632; WO 1989-001491; WO 2000-022063; U.S. Patent 6,017,854; and U.S. Patent Application Publication 2008/0318812. U.S. Patent Application Publication 2008/0318812, in particular, specifies a hydrocarbon fluid having a viscosity of at least 5 centistokes (5 cSt or 5x10⁻⁶ m²/s).

It has been noted (EPA web site information, as adapted from Powell et al., 1999) that hydraulic fracturing fluids should have the following characteristics: (i) be viscous enough to create a fracture of adequate width; (ii) maximize fluid travel distance to extend fracture length; (iii) be able to transport large amounts of proppant into the fracture; (iv) require minimal gelling agent to allow for easier degradation or "breaking"; and (v) reduced cost.

Some fluids which would otherwise be suitable for use in hydraulic fracturing applications may not be effectively formulated due to having relatively low viscosity, causing phase separation or settling of suspended formulation constituents. Accordingly, there is a need for formulations that avoid phase separation and settling and that are more storage-stable.

Moreover, there is also the problem that formulations transported from the formulation site to the field may undergo extreme temperature variations which alter the physical properties of the formulations, e.g., settling of suspensions when fluid viscosity decreases further due to increasing temperature. On the other hand, an extreme decrease in temperature may result in a formulation which becomes unpourable, due to the fluid having a pour point which is too high. Accordingly, there is a need for formulations that are more robust with respect to change in temperature.

Accordingly, it would be highly beneficial if alternative fluids or remedies could be found that could address all of the shortcomings of the prior art.

The present invention relates to the use of a low viscosity hydrocarbon with low pour point having low or no BTEX compounds in hydraulic fracturing formulations and hydraulic fracturing processes.

### SUMMARY OF THE INVENTION

The invention is directed to use of a hydrocarbon fluid having a kinematic viscosity of about 2.20 cSt (25°C) or less (ASTM D445), a pour point of -35°C or less (ASTM D97), a total aromatics concentration of 0.02 wt% maximum (AM-S 140.31), and preferably a polycyclic aromatic hydrocarbon (PAH) content of less than 10 mg/kg, and/or preferably further characterized as having "not detected" (ND) levels, by GC/Mass Spectrometry, of benzene, toluene, ethylbenzene, and xylenes (BTEX; practical quantitation limits are benzene = 0.2 mg/kg, toluene = 0.3 mg/kg, ethylbenzene = 0.1 mg/kg, o-xylene = 0.1 mg/kg, m-xylene plus p-xylene = 0.1 mg/kg), in a hydraulic fracturing process, and to a composition for hydraulic fracturing comprising said hydrocarbon fluid and at least one, preferably both, of: (i) a suspension agent, such as guar, derivatized guar, and the like, and (ii) a thickening agent, preferably characterized as suitable to provide a composition with a viscosity of 2.70 cSt or higher, preferably about 3-4 cSt or higher, at 25°C (ASTM D445), in combination solely with said hydrocarbon fluid.

In embodiments said composition comprising the hydrocarbon fluid, the suspension agent, and the thickening agent is characterized as maintaining a suspension of a polymeric suspension agent when said composition is heated or cooled, such as from ambient conditions to conditions of transport or use of the final composition (which may be below 0°C), such as from 70°C to -30°C, and the like.

The invention is also directed to a process for recovery of oil and/or natural gas from subterranean reservoirs using hydraulic fracturing techniques and hydraulic fracturing fluid composition, the improvement comprising use of a hydraulic fracturing fluid formulation comprising a hydrocarbon fluid having a kinematic viscosity of about 2.20 cSt (25°C) or less, a pour point of -35°C or less, a total aromatics concentration of 0.02 wt% maximum, and preferably a polycyclic aromatic hydrocarbon (PAH) content of less than 10 mg/kg, and/or preferably further characterized as having "not detected" (ND) levels of benzene, toluene, ethylbenzene, and xylenes (BTEX), and at least one and preferably both of: (i) a suspension agent, such as guar, derivatized guar, and the like, and (ii) a thickening agent characterized as suitable to provide a formulation with a viscosity of 2.7 cSt or higher, preferably about 3-4 cSt or higher at 25°C in combination solely with said hydrocarbon fluid. It is an object of the invention to provide a formulation that uses, as a base fluid, a hydrocarbon fluid heretofore believed unsuitable for hydraulic fracturing formulations because of its low viscosity, but otherwise having advantageous characteristics including, in embodiments, one or more of low or no BTEX content, availability, relative ease and safety of usage.

It is still further an object of the invention to provide a pre-mixed formulation comprising the aforementioned low viscosity, low pour point hydrocarbon fluid, and one or more thickening agents, that in embodiments is storage stable, and can be provided to an intermediate or end user to be further modified for final use in the field for oil and gas production.

These and other objects, features, and advantages will become apparent as reference is made to the following detailed description, preferred embodiments, examples, and appended claims.

### DETAILED DESCRIPTION

According to the invention, hydrocarbon fluids having a kinematic viscosity of about 2.20 cSt (25°C) or less, a pour point of -35°C or less, a total aromatics concentration of 0.02 wt% maximum, and preferably a polycyclic aromatic hydrocarbon (PAH) content of less than 10 mg/kg, and/or preferably further characterized as having "not detected" (ND) levels of benzene, toluene, ethylbenzene, and xylenes (BTEX), are used in hydraulic fracturing formulations (including intermediate and final end-use formulations), and processes using the same. Heretofore such fluids were considered to lack the proper viscosity for use in certain hydraulic fracturing formulations. However surprisingly it has been found that with appropriate viscosification, slurries of guar, guar derivatives, and the like, can be prepared from said fluids which provide significant advantages over what is suggested in the prior art, particularly with respect to low or no BTEX content, and which, in embodiments are stable, that is, no visible phase separation of said hydrocarbon fluid and viscosifier, even at low or high temperatures.

The hydrocarbon fluids useful herein are normal paraffinic, isoparaffinic, cycloparaffinic, and dearomatized mixed aliphatic (normal, branched, and cyclic paraffins) fluids, and mixtures thereof. Normal paraffins are linear alkanes, having the general formula CₙH₂ₙ₊₂. Isoparaffinic solvents are branched alkanes having at least one tertiary or quaternary carbon. The most preferred dearomatized mixed aliphatic fluids are dearomatized mixed aliphatic solvents containing linear, branched, and cyclic paraffins which have aromatics removed or significantly reduced (e.g., < 0.02 wt%). In preferred embodiments such hydrocarbon fluids are also characterizable as having no or low BTEX content. One of skill in the art, in possession of the present disclosure, can make such compositions without undue experimentation, and further would know that such compositions are commercially available.

Particularly preferred fluids are Escaid^{™} Fluids, commercially available from ExxonMobil Chemical Company, Baytown, TX, USA, most particularly Escaid^{™} PathFrac^{™} Fluid, a mixture of de-aromatized aliphatic molecules composed of normal, branched, and cyclic alkanes, and having a kinematic viscosity of about 2.20 cSt (25°C), a pour point of -35°C or less, a total aromatics concentration of 0.02 wt% maximum, a polycyclic aromatic hydrocarbon (PAH) content of less than 10 mg/kg, and having "not detected" (ND) levels of benzene, toluene, ethylbenzene, and xylenes (BTEX).

Particularly useful thickening agents include such known and commercially available viscosity modifiers that are polymeric viscosifying agents available from Kraton, for example Kraton^{™} G1701 polymer or Kraton^{™} G1650 polymer. Particularly useful thickening agents also include such known and commercially available viscosity modifiers that are polyalphaolefins (PAOs) available from ExxonMobil Chemical Company, Baytown, TX, particularly SpectraSyn^{™} grade PAOs, more particularly SpectraSyn^{™} Elite^{™} 65 PAO, SpectraSyn^{™} Elite^{™} 150 PAO, both of which are metallocene PAOs (mPAOs, produced with metallocene catalysts), and SpectraSyn^{™} 100 PAO. As used herein, the term "PAO" includes mPAO. Yet other examples of a useful viscosity modifiers are ethylene propylene diene polymers, such as Vistalon^{™} polymers, available from ExxonMobil Chemical Company. Combinations of two or more thickening agents is also contemplated.

The thickening agent is dissolved in the hydrocarbon fluid typically with the use of heat and agitation as necessary. The viscosity of the homogenous solution is then measured, for example, using test method ASTM D7042 and a viscometer instrument such as an Anton Paar^{™} SVM 3000. In preferred embodiments a polymeric viscosifying agent such selected from the aforementioned Kraton polymers is used as the thickening agent in the preferred amount of from 0.4 to 1.0 wt%, more preferably 0.5 to 0.8 wt%, based on the amount of hydrocarbon fluid (without solid material to be suspended, e.g., guar). In another preferred embodiments a PAO viscosifying agent is used as the thickening agent in the preferred amount of from 5.0 to 20.0 wt%, based on the amount of hydrocarbon fluid (without solid material to be suspended, e.g., guar). For instance, using 10 wt% SpectraSyn^{™} Elite^{™} 65 PAO in Escaid^{™} Pathfrac^{™} Fluid provides a solution having a viscosity of about 3.24 cSt at 25°C, and 10 wt% SpectraSyn^{™} Elite^{™} 150 PAO in Escaid^{™} Pathfrac^{™} Fluid provides a solution having a viscosity of about 3.77 cSt at 25°C.

In addition to guar and derivatives thereof, xanthan and derivatives thereof, hydroxy-ethyl cellulose, carboxymethylhydroxyethyl cellulose, and derivatives of such cellulosic materials, or other polysaccharide polymers known to be useful in hydraulic fracturing compositions as polymeric suspension agents, and mixtures thereof, are also useful herein. Accordingly, such additives are broadly referred to herein as "suspension agent". In embodiments and among other characteristics, the suspension agent is provided in order to assist in the suspension and/or delivery of the proppant (discussed below). In embodiments, one or more suspension agents are added in an amount sufficient to suspend the particulate material, i.e., proppant (discussed below) and reduce settling during storage, transportation, and use in the fracturing process. Also useful in this regard are friction reducing agents such as polyacrylamide inverse emulsions.

The term "proppant" as used herein, takes the meaning well known in the art. The term "proppant" refers to a granular substance suspended in the fracturing fluid during the fracturing operation. Proppants useful herein are familiar to those skilled in the art, such as sand, resin-coated sand, sintered bauxite, glass beads, and the like, and includes mixtures thereof.

The final hydraulic fracturing formulation may contain a variety of additional materials, in addition to those mentioned previously, which may be included in the fracturing fluid formulation or added at the site, to perform desired task, such as friction reduction, formation clean up, foam stabilization, leakoff inhibition, surface tension reduction, or carrying or dissolving other ingredients. These additives include friction reducers, liquid gelling agents, biocides, fluid-loss agents, enzyme breakers, acid breakers, oxidizing breakers, and surfactants such as emulsifiers and non-emulsifiers. Several products may exist in each of these categories.

The composition of the present invention, in combination with other appropriate additives known in the art may also be used in drilling, completion, work-over and stimulation of wells drilled for petroleum sources.

While the illustrative embodiments of the invention have been described with particularity, it will be understood that various other modifications will be apparent to and can be readily made by those skilled in the art without departing from the spirit and scope of the invention.

Trade names used herein are indicated by a ^{™} symbol or ® symbol, indicating that the names may be protected by certain trademark rights, e.g., they may be registered trademarks in various jurisdictions. All patents and patent applications, test procedures (such as ASTM methods, UL methods, and the like), and other documents cited herein are fully incorporated by reference to the extent such disclosure is not inconsistent with this invention and for all jurisdictions in which such incorporation is permitted. When numerical lower limits and numerical upper limits are listed herein, ranges from any lower limit to any upper limit are contemplated.

## Claims

1. In a process for recovery of oil and/or natural gas from subterranean reservoirs using hydraulic fracturing techniques and hydraulic fracturing fluid composition, the improvement comprising use of a hydraulic fracturing fluid formulation comprising a hydrocarbon fluid having a kinematic viscosity of about 2.20 cSt (25°C) or less (ASTM D445), a pour point of -35°C or less (ASTM D97), a total aromatics concentration of 0.02 wt% maximum (AM-S 140.31), preferably a polycyclic aromatic hydrocarbon (PAH) content of less than 10 mg/kg and/or preferably further characterized as having "not detected" (ND) levels of benzene, toluene, ethylbenzene, and xylenes (BTEX) by GC/Mass Spectrometry, and at least one and preferably both, of: (i) a suspension agent, and (ii) a thickening agent.

2. The process of Claim 1, wherein said thickening agent is characterized as a polymeric viscosity modifier and is present in the amount of from 0.4 to 1.0 wt%, preferably 0.5 to 0.8 wt%, based on the weight of hydrocarbon fluid.

3. The process of Claim 1, wherein said thickening agent is characterized as a PAO and is present in the amount of from 5.0 to 20.0 wt%, based on the weight of hydrocarbon fluid.

4. The process of any one of the preceding claims, said formulation comprising a thickening agent in an amount suitable to provide a formulation having a viscosity of 2.70 cSt or higher, preferably about 3-4 cSt or higher, at 25°C (ASTM D445), when in combination solely with said hydrocarbon fluid.

5. The process of Claim 4, including at least one thickening agent selected from ethylene propylene diene polymers.

6. The process of any one of the preceding claims, wherein said hydraulic fracturing fluid formulation is characterized as maintaining a stable solution when said formulation is exposed to temperatures of from 70°C to -30°C.

7. The process of any one of the preceding claims, further comprising a step of combining proppant and a composition comprising said hydraulic fracturing fluid formulation.

8. A formulation comprising a hydrocarbon fluid having a kinematic viscosity of about 2.20 cSt (25°C) or less (ASTM D445), a pour point of -35°C or less (ASTM D97), a total aromatics concentration of 0.02 wt% maximum (AM-S 140.31), preferably a polycyclic aromatic hydrocarbon (PAH) content of less than 10 mg/kg and/or preferably further characterized as having "not detected" (ND) levels of benzene, toluene, ethylbenzene, and xylenes (BTEX) by GC/Mass Spectrometry, and at least one and preferably both, of: (i) a suspension agent, and (ii) a thickening agent.

9. The formulation of Claim 8, wherein said thickening agent is characterized as a polymeric viscosity modifier and is present in the amount of from 0.4 to 1.0 wt%, preferably 0.5 to 0.8 wt%, based on the amount of hydrocarbon fluid.

10. The formulation of Claim 8, wherein said thickening agent is characterized as a PAO and is present in the amount of from 5.0 to 20.0 wt%, based on the amount of hydrocarbon fluid.

11. The formulation of any one of Claims 8-10, said formulation comprising a thickening agent in an amount suitable to provide a formulation having a viscosity of 2.70 cSt or higher, preferably about 3-4 cSt or higher, at 25°C (ASTM D445), when in combination solely with said hydrocarbon fluid.

12. The formulation of Claim 11, including a thickening agent selected from ethylene propylene diene polymers.

13. The formulation of any one of Claims 8-12, characterized as maintaining a stable solution when said formulation is exposed to temperatures from 70°C to -30°C.

14. The formulation of any one of Claims 8-13, further comprising a suspension agent comprising guar or derivative thereof, and/or a polyacrylamide friction reducer.

15. The formulation of any one of Claims 8-14, comprising at least one proppant.
